# EUROPEAN PATENT APPLICATION

(11) **EP 3 450 129 A1**
(43) Date of publication of application: **06.03.2019**
(21) Application number: 18000703.1
(22) Date of filing: 30.08.2018
(51) Int. Cl.: B29C 44/12, A61G 7/10, A61G 13/12

(54) **CUSHION FOR POSITIONING PATIENTS AND METHOD FOR MAKING IT**

(30) Priority: 04.09.2017 IT 201700098840
(71) Applicant: Essebi Medical S.R.L., 47896 Faetano (SM)
(72) Inventor: Bolzon, Alessandra, 35027 Noventa Padovana (PD) (IT)
(74) Representative: Montebelli, Marco

(57) **Abstract**

A cushion for positioning patients, comprises an outer cover (11), in which there is a bag (12), equipped with two separate compartments (12a, 12b), which contain two components suitable for mixing with each other to form a polyurethane foam. The outer cover (11) comprises an outer surface (11a) made of non-woven fabric and an inner surface (11b) made of polymeric material, in such a way as to allow sealing of the outline of the outer cover (11), guaranteeing the impermeability of the cushion (1).

## Description

This invention relates to a cushion for positioning patients and the related method for making it.

In the medical - health sector, or veterinary too, there is often the need to keep patients, or parts of their body, perfectly still during particular therapies or during the post-therapy stage.

By way of example, one may consider how important it is in radiotherapeutic treatments at each session to repeatedly and precisely identify the target and, in contrast, how difficult it may be for a patient on each occasion to spontaneously re-adopt the same position; and even, after surgeries, to keep the limb operated on in the same position, so as to promote more rapid and effective recovery; or also, in the ophthalmologic sector, both during surgery and afterwards, how important it may be for a patient who is temporarily blind to hold his or her head in a forcedly static position.

For this purpose, there are prior art devices which adopt the shape of the body (or of a part of it) of a patient and then stably harden in such a way as to form a sort of mold that is reusable over time for a new therapy session or during post-therapy treatment.

In order to make such devices, use of an open bag is known, into which the components intended to react are poured (until the 1970s individually, thereafter just after being mixed); the bag is then closed by hand and, while a polyurethane foam forms from the interaction of the above-mentioned components, the patient is set down on top of the cushion being formed in order to give it the desired shape.

The main disadvantage of these cushions is the fact that the reagents that form the foam are poured directly into an open bag, meaning that there is the possibility of them being inhaled or touched by operators, potentially harming their health.

Moreover, the rapid hardening of the foam allows reduced shaping of the cushion, which takes on its definitive shape in a time of approximately one minute; finally, the substances of which the reagents are composed have a very bad odor and their exposure renders very uncomfortable the condition of the patient who must contribute to rapid shaping of the cushion.

Also known, but in a different sector, such as that of packaging of fragile objects, is the use of mixtures of components, which, once in contact in limited spaces having the shape of a pad, produce a polyurethane foam with a consistency such that it dampens impacts during transportation of such objects.

Therefore, in the circumstance just described and on the contrary to what is necessary in the sector relevant to the invention, the aim is to obtain a cushion with such softness, which would also be unusable in the medical - health sector.

Moreover, during the formation of this foam, a quantity of heat is given off that is such that it heats up the pad being formed, to temperatures which would make it quite difficult to maintain contact with the hands and therefore would absolutely prevent contact with the body of the patient who would have to give the cushion the shape that he or she would subsequently need.

The aim of this invention is, therefore, to eliminate the above-mentioned disadvantages. The invention, as characterized by the claims, achieves the aim by means of a cushion having a sealable cover made of suitable materials.

The main advantage obtained by means of this invention is basically the fact that the substances which generate the polyurethane foam always remain in spaces that are inaccessible to operators, eliminating the possibility that they can be touched or inhaled by them. For the same reason, the unpleasant odor they give off is not perceived.

Moreover, the times for shaping the cushion are extended to a total of around 10 minutes after formation of the foam, therefore allowing greater precision when making the mold.

Finally, even the heat produced is less than in the prior art solutions, and the materials used further reduce the perception of it by the patient during molding of the cushion.

Further advantages and features of the invention are more apparent in the detailed description which follows, with reference to the accompanying drawings, which illustrate an example of it without limiting the scope of the invention, in which:
Figure 1 illustrates a first step of making the invention;
Figure 2 illustrates the invention during a second step of making it;
Figure 3 illustrates several possible forms of the invention;
Figure 4 illustrates a detail of the invention.

As can be seen in the figures, the invention relates to a cushion for positioning patients, comprising an outer cover 11, in which there is a bag 12, equipped with two separate compartments 12a, 12b, which contain two components suitable for mixing with each other to form a polyurethane foam. The outer cover 11 comprises an outer surface 11a made of non-woven fabric and an inner surface 11b made of polymeric material, in such a way as to allow sealing of the outline of the outer cover 11.

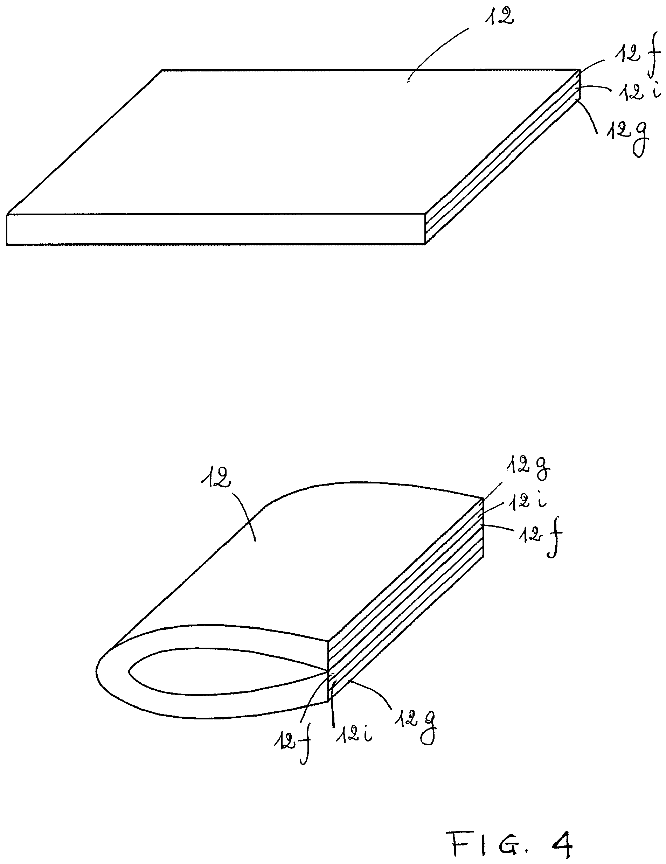

As shown in figure 4, the bag 12 is preferably made by three layers 12g, 12i, 12f in different materials: an outer layer 12g in polyester, an intermediate layer 12i in aluminum, and an inner layer 12f in polyethylene, directly concerned by several seals 12c, 12d, 12e, among which the lateral seal 12c is very resistant.

The two compartments 12a, 12b are separated by a central seal 12c not very resistant, whose break allows the mixing of the components inside content, and both are separated from the inside of the outer cover 11 by a seal 12d medium resistant, whose break allows the foam spreads inside the cushion 1.

The components located inside the two compartments 12a, 12b of the bag 12 comprise, respectively, a polymeric isocyanate and a formulated polyol system, constituted of at least one mixture of propoxylated polyether polyols, a flame retardant, silicone, a catalyst, an expanding or blowing agent.

Whereas functionality means the number of reactive hydroxyl groups per molecule, and the units of measurement used are millipascal-seconds (mPa.s) for viscosity, milligrams of potassium hydroxide per gram (mgKOH/g) for acidity and grams per cubic centimeter (g/cm³) for specific weight, the ranges for the various components are linked to the different desired consistency to be obtained for the polyurethane foam.

The polymeric isocyanate is a mixture of 4,4'- methylene diphenyl diisocyanate and homologues, having a NCO (isocyanate functional group) content ranging from 30 to 32%, functionality from 2.70 to 2.85, viscosity from 150 to 800 mPa.s at 25 °C.

The propoxylated polyether polyols have functionality from 3 to 4.5, acidity from 30 to 500 mgKOH/g, and viscosity from 400 to 8,500 mPa.s at 25 °C; the flame retardant contains chlorophosphates and has a specific weight from 1.06 to 1.30 g/cm³ and viscosity from 1.5 to 100 mPa.s at 25 °C; the silicone contains modified polydimethylsiloxane chains with polyethers and has specific weight from 1.01 to 1.10 g/cm³ and viscosity from 500 to 2,000 mPa.s at 25 °C; the catalyst comprises tertiary amine catalysts and dilute metal salts and has specific weight from 0.70 to 1.30 g/cm³ and viscosity from 5 to 20 mPa.s at 25 °C; the blowing agent is carbon dioxide.

For the outer surface 11a of the cover 11 of the cushion 1 it is preferable to use a polypropylene or polyester non-woven fabric; whilst for the inner surface 11b it is preferable to use polyethylene or polyurethane as a polymer.

Amongst the possible combinations of the above-mentioned components, the one that has given the best results involves the use of polyester for the outer surface 11a and polyurethane for the inner surface 11b.

In fact, the use of a polyester microfiber fabric for the outer surface 11a, comparable to cotton, washable and sanitizable, is the most comfortable for the patient, whilst the use of a polyurethane film for the inner surface 11b, of the same type as the polyurethane foam, allows maximum adherence and cohesion between said foam and the outer cover 11 of the cushion and avoids a relative sliding of them; and in addition, the sealing between these two materials is much stronger relative to heavy loads, for example, as may be the case with very heavy patients.

Moreover, the high elasticity of the polyurethane film compared with that of other polymers, allows an adaptation to the expanded foam which results in a limitation of puckering, wrinkling and creases on the outer wall of the cushion 1 in contact with the patient, greatly benefiting comfort and mold precision.

Finally, with sealing of the final side of the outer cover 11, the polyurethane film creates an electromagnetic field which causes expulsion of the remaining air and prevents it from going back in: thanks to this, at the time of final molding of the cushion 1, there are no air bubbles inside it and the shape of the mold is smoother.

In order to better guarantee this result, the outer cover 11 preferably comprises several pinholes 13, at least concerning the inner surface 11b: said pinholes 13 have a diameter of 0.45 ÷ 1.60 millimeters, and preferably of 0.6 ÷ 0.8 millimeters, so as to allow the air outflow, but avoiding the foam outflow.

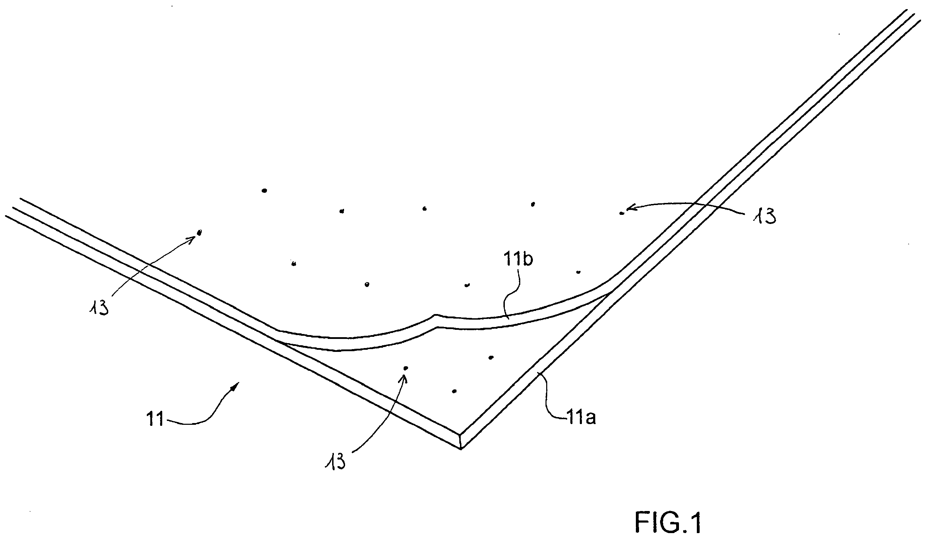

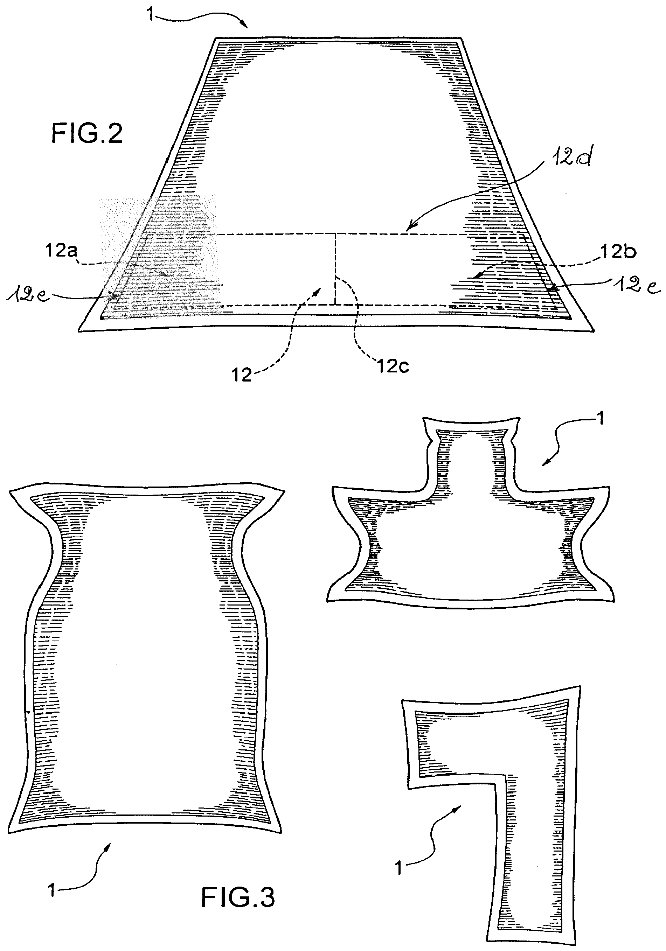

The method for making the cushion 1 for positioning patients comprises first, as shown in Figure 1, coupling a non-woven fabric and a polymeric film in such a way as to form an outer cover 11 with an outer surface 11a made of non-woven fabric and an inner surface 11b made of polymeric film; then, a bag 12 is inserted in the outer cover 11, the bag being provided with two compartments 12a, 12b separated by a seal 12c, containing two components suitable for mixing with each other to form a polyurethane foam, as shown in Figure 2. Hermetically sealing the outer cover 11 allows the polyurethane foam expansion space to be restricted or limited, therefore preventing the components that generate it from in any way coming into contact with, or being inhaled by, the operators and patients.

At this point, the components are mixed for around 30-40 seconds by breaking the separating seal 12c between the two compartments 12a, 12b with consequent formation of the polyurethane foam, whose thrust breaks the bag 12 in correspondence with the seal 12d facing on the inside of the outer cover 11, where happens the spreading of the foam. The foam is manually distributed for around 1 minute until the start of solidification, then the patient is positioned on the cushion 1, staying still for the desired shaping for approximately 3 minutes during the solidification. Completion of solidification and of final modelling to obtain the desired shape (Figure 3 shows several of them) require approximately another 5 minutes.

## Claims

1. A cushion for positioning patients, comprising an outer cover (11), in which there is a bag (12), equipped with two separate compartments (12a, 12b), which contain two components suitable for mixing with each other to form a polyurethane foam, **characterized in that** the outer cover (11) comprises an outer surface (11a) made of non-woven fabric and an inner surface (11b) made of polymeric material, in such a way as to allow sealing of the outline of the outer cover (11).

2. The cushion according to claim 1, **characterized in that** the components comprise:
a polymeric isocyanate;
a formulated polyol system constituted at least of a mixture of propoxylated polyether polyols, a flame retardant, silicone, a catalyst, an expanding agent.

3. The cushion according to claim 1 or 2, **characterized in that** the outer surface (11a) is made of polypropylene.

4. The cushion according to claim 1, **characterized in that** the outer surface (11a) is made of polyester.

5. The cushion according to claim 2, **characterized in that** the polymeric isocyanate is a mixture of 4,4'- methylene diphenyl diisocyanate and homologues, having a NCO content ranging from 30 to 32%, functionality from 2.70 to 2.85, viscosity from 150 to 800 mPa.s at 25 °C.

6. The cushion according to claim 2, **characterized in that** the propoxylated polyether polyols have a functionality ranging from 3 to 4.5, acidity from 30 to 500 mg KOH/g, viscosity from 400 to 8,500 mPa.s at 25 °C.

7. The cushion according to claim 2, **characterized in that** the flame retardant contains chlorophosphates and has a specific weight of from 1.06 to 1.30 g/cm³ and viscosity from 1.5 to 100 mPa.s at 25 °C.

8. The cushion according to claim 2, **characterized in that** the silicone contains polydimethylsiloxane chains modified with polyethers and has a specific weight of from 1.01 to 1.10 g/cm³ and viscosity from 500 to 2,000 mPa.s at 25 °C.

9. The cushion according to claim 2, **characterized in that** the catalyst comprises tertiary amine catalysts and dilute metal salts and has a specific weight of from 0.70 to 1.30 g/cm³ and viscosity from 5 to 20 mPa.s at 25 °C.

10. The cushion according to claim 2, **characterized in that** the expanding agent is carbonic dioxide.

11. The cushion according to claim 1 or 2, **characterized in that** the inner surface (11b) is made of polyethylene.

12. The cushion according to claim 1 or 2, **characterized in that** the inner surface (11b) is made of polyurethane.

13. A method for making a cushion for positioning patients, **characterized in that** it comprises at least the following steps:
coupling a non-woven fabric and a polymeric film in such a way as to form an outer cover (11) with an outer surface (11a) made of non-woven fabric and an inner surface (11b) made of polymeric film;
inserting a bag (12) in the outer cover (11), the bag being equipped with two compartments (12a, 12b) separated by a seal (12c), containing two components suitable for mixing with each other to form a polyurethane foam;
hermetically sealing the outer cover (11), in such a way as to limit the expansion space of the polyurethane foam;
mixing the components for approximately 1 minute by breaking the seal (12c) separating the two compartments (12a, 12b) and formation of the polyurethane foam;
breaking of the bag (12) and spreading of the foam inside the outer cover (11);
manual distribution of the foam for approximately 2 minutes until it begins to solidify;
positioning of the patient for the desired shaping during solidification and having the patient stay still for approximately 4 minutes;
achieving complete solidification and final modelling in approximately 5 minutes;

14. The cushion according to claim 1, **characterized in that** the bag (12) comprises three layers (12g, 12i, 12f) in different materials: an outer layer (12g) in polyester, an intermediate layer (12i) in aluminum, and an inner layer (12f) in polyethylene.

15. The cushion according to claim 1 or 12, **characterized in that** at least the inner surface (11b) of the outer cover (11) is concerned by pinholes (13) having a diameter of 0.45 ÷ 1.60 millimeters, and preferably of 0.6 ÷ 0.8 millimeters.
